# EUROPÄISCHE PATENTSCHRIFT

(11) **EP 0 644 213 B1**
(45) Veröffentlichungstag und Bekanntmachung des Hinweises auf die Patenterteilung: **28.01.1998**
(21) Anmeldenummer: 94114011.3
(22) Anmeldetag: 07.09.1994
(51) Int. Cl.: C08F 265/06, C09J 151/00, C09J 7/02

(54) **Haftklebedispersionen**
Dispersions for pressure-sensitive adhesives
Dispersions pour adhésifs autocollants

(30) Priorität: 21.09.1993 DE 4332012
(43) Veröffentlichungstag der Anmeldung: 22.03.1995
(73) Patentinhaber: Röhm GmbH, 64293 Darmstadt (DE)
(72) Erfinder: Müller, Gunther, Dr., D-64579 Gernsheim (DE); Fink, Herbert, Dr., D-64404 Bickenbach (DE); Heyne, Joachim, Dr., D-67117 Limburgerhof (DE)

(56) Entgegenhaltungen:
- WO-A-90/15853
- DE-A- 3 319 340
- Derwent Publications Ltd., London, GB; AN 82-18329E & JP-A-57 016 082 (HOECHST GOSEI KK) 27. Januar 1982
- DATABASE WPI Derwent Publications Ltd., London, GB; AN 93-164733 & JP-A-5 098 222 (NITTO DENKO CORP) 20. April 1993
- Derwent Publications Ltd., London, GB; AN 82-18329E & JP-A-57 016 082
- DATABASE WPI Derwent Publications Ltd., London, GB; AN 93-164733 & JP-A-5 098 222

## Beschreibung

### Gebiet der Erfindung

Die Erfindung betrifft Haftklebedispersionen aus wäßrigen Alkyl(meth)acrylatdispersionen.

### Stand der Technik

Haftklebstoffe, gelegentlich auch Selbstklebemassen genannt, bilden einen permanent klebrigen Film, der bereits unter geringem Druck bei Raumtemperatur an den verschiedenen Oberflächen sofort haftet (engl. "pressure sensitive adhesive" vgl. Ullmann's Encyclopedia of Industrial Chemistry, 5th Ed., Vol. A1, 235 - 236 VCH 1985).
Haftklebstoffe dienen hauptsächlich zur Beschichtung von Trägern, vornehmlich auf Papier- oder Polymerfolienbasis, wie z.B. Selbstklebeetiketten, -bänder, -folien u.ä. Charakteristisch für diese Produktklassen ist ein breites Eigenschaftsspektrum, das von der Klebewirkung bei Berührung des Klebefilms auf der Substratoberfläche bei kurzer Kontaktzeit ("Tack") bis hin zur Wasserfestigkeit der Klebeschicht reicht. Verständlicherweise kann ein und derselbe Haftklebstoff nicht alle gewünschten - z.T. sich gegenseitig ausschließenden - Eigenschaften aufweisen, so daß letztendlich eine auf den jeweiligen Anwendungszweck hin optimierte Eigenschaftskombination gefunden werden muß. Oft erfolgt die Produktoptimierung durch den Zusatz verschiedenster Hilfsstoffe wie z.B. Kondensationsharze, Tackifier, Benetzungsmittel, Viskositätsregler u.ä. Die eigentlichen Klebstoffe werden je nach ihrer Zusammensetzung in Form von Lösungen, Dispersionen oder auch Schmelzen auf die Träger aufgetragen. Nach dem Abbinden des Klebstoffs liegt die Haftkleberschicht als Film auf dem Träger vor. Häufig wird sie bis zur Anwendung der Träger mit einem geeigneten antiadhäsiven Material, insbesondere mit einer silikonisierten Schicht abgedeckt; es kommen aber auch Klebebänder ohne Abdeckschicht zur Anwendung (vgl. Ullmann's Encyclopedia loc.cit., pg. 258). Als Klebermaterial für Haftklebstoffe dienen natürliche und synthetische Kautschukarten gegebenenfalls in modifizierter Form. Neben Kautschuk finden häufig Poly(meth)acrylsäureester, Polyvinylether, Polyisobutylentypen, oft in Kombination mit Phenolformaldehyd- oder Kohlenwasserstoffharzen, Verwendung.

Als sogenannte Dispersionshaftklebstoffe werden sehr häufig Polyacrylat-Dispersionen, daneben auch Vinylacetat-Copolymerisate, eingesetzt. Häufig werden auch hier Harze zugesetzt.

### Aufgabe und Lösung

Die vorliegende Aufgabe sei am Beispiel von Haftklebebändern auf Basis von (coronabehandeltem) Polypropylenbandmaterial näher erläutert. Derartige Haftklebebänder werden beispielsweise mit Vorteil als Verpackungsklebebänder für Karton verwendet. Die Anforderung für dieses Anwendungsgebiet besteht vor allem in einer guten Haftung der Klebebänder auf der Kartenoberfläche (Adhäsion) sowie in guter innerer Festigkeit der Klebeschicht (Kohäsion). Beide Anforderungen können meist nicht gleichermaßen gut erfüllt werden, da viele Maßnahmen, die z.B. eine gute Kohäsion bewirken, sich wiederum nachteilig auf die Adhäsion auswirken. So ist bekannt, daß die Kohäsion mit steigendem Molekulargewicht des Polymerisats zunimmt, die Adhäsion sich aber parallel in entsprechendem Ausmaße verschlechtert.

Im Ullmann (loc.cit) wird festgestellt: "Es gibt Hinweise, daß ein Haftklebstoff stets aus einem hochpolymeren Basisharz, das die Kohäsionseigenschaft und die spezifische Haftung bestimmt, und klebrigmachenden Harzen (sog. Tackifier) aufgebaut sein muß, wobei das klebrigmachende Harz in manchen Systemen auch durch niedermolekulare Anteile des Basispolymeren ersetzt sein kann. Zur Erhöhung der Kohäsion wird das Basisharz in manchen Systemen nach dem Auftrag vernetzt bzw. im Fall von Kautschuk vulkanisiert".
Für die Durchführung der Emulsionspolymerisation haben sich ungeachtet verschiedener Varianten doch weitgehend Erfahrungsregeln durchgesetzt. So gilt z.B. die Verwendung von Ammoniumperoxodisulfat als Initiator als Standardmaßnahme. In der Literatur wird für die Emulsionspolymerisation unter Verwendung von Peroxodisulfatverbindungen als Initiatoren ein Prozentsatz von 0,001 bis 0,05 Gew.-% bezogen auf die Monomeren angegeben (vgl. Houben-Weyl, Methoden der Organischen Chemie, 4. Aufl., Bd. XIV/1 1049, G. Thieme 1961; H. Rauch-Puntigam, Th. Völker, Acryl- und Methacrylverbindungen loc.cit., S. 221).

Der vorliegenden Erfindung lag die Aufgabe zugrunde ausgehend von den an sich bekannten Acrylathaftklebern deren Eigenschaften, insbesondere Kohäsion und vor allem Klebewirkung zu verbessern.
Ausgegangen wird dabei von einem Basisharz, aufgebaut aus Butylacrylat in Kombination mit relativ geringen Anteilen (< 15 Gew.-%) an (Meth)acrylsäure.
Die vorliegende Erfindung lehrt, daß die innere Festigkeit der Klebeschicht zwar durch Copolymerisation mit verschiedenen Vernetzersystemen in unterschiedlichen Konzentrationen gesteigert werden kann - genannt seien z.B. Allyl(meth)acrylat, Glykoldimethacrylat, Methacrylamid, N-Methylolmethacrylamid, Triallylcyanurat; vgl. H. Rauch-Puntigam, Th. Völker, Acryl- und Methacrylverbindungen, Springer-Verlag 1968 - daß aber derartig vernetzte Systeme gewöhnlich nur geringe Klebekräfte aufweisen, die sich auch durch Regelung des Molekulargewichts bei der Emulsionspolymerisation nicht entscheidend erhöhten.
Es wurde nun gefunden, daß überraschenderweise in Emulsionspolymerisation hergestellte Polymerisate auf Basis n-Butylacrylat/(Meth)acrylsäure das geforderte Eigenschaftsprofil - sehr gute Kohäsion bei ausgezeichneter Adhäsion - dann erfüllen, wenn spezielle wasserlösliche Initiatoren IN in sehr großen Mengen (verglichen mit üblichen Anwendungskonzentrationen) zur Anwendung kommen.
Desweiteren beobachtet man das erwünschte Eigenschaftsspektrum der Haftklebefilme in vollem Umfang nur dann, wenn die Haftklebedispersionen nach dem Verfahren eines Kern-Schale-Polymerisation polymerisiert werden. Damit soll das angewendete Verfahren bezeichnet sein, ohne daß zwingend die damit verknüpfte Modellvorstellungen vorausgesetzt werden. Eine Kern/Schale Morphologie versteht sich als Ergebnis folgenden operativen Handelns: In einer ersten Stufe der Emulsionspolymerisation wird nur das Monomere, das den Kern bilden soll polymerisiert, wonach in einer zweiten Stufe das Monomere, das die Schale bilden soll, zudosiert wird und zusammen mit dem Rest des ersten Monomeren zu Ende polymerisiert wird. Im Sinne der Kern-Schale-Polymerisation soll der Kern aus Butylacrylat aufgebaut sein. Ein homogener Einbau der (Meth)acrylsäure bzw. eine Variation des Kern-Schale-Verhältnisses resultiert z.B. in einer drastischen Verschlechterung der Wärmestandfestigkeit.
Die vorliegende Erfindung betrifft somit ein Verfahren zur Herstellung von Haftklebedispersionen auf Basis eines Copolymerisats CP, aufgebaut aus n-Butylacrylat und geringen Anteilen von (Meth)acrylsäure, wobei man in wäßriger Phase unter den Bedingungen der Kern-Schale-Emulsionspolymerisation in Anwesenheit von wasserlöslichen Initiatoren IN der Formel I

M R₁ (I)

worin M für Metallkationen wie Natrium oder Kalium und R₁ für das Anion einer Peroxosäure oder Azo-gruppenhaltigen Säure steht, in Mengen von 1 ± 0,5 Gew.-% bezogen auf die Monomeren, im ersten Schritt Butylacrylat als Kern polymerisiert und im zweiten Schritt Butylacrylat und (Meth)acrylsäure im Gesamtverhältnis 99,5 zu 0,5 bis mehr als 85 zu weniger als 15, vorzugsweise 98 zu 2 bis 96 zu 4 Gew.-Teilen, wobei das Verhältnis Kern zu Schale vorzugsweise 30 : 70 bis 70 : 30, insbesondere 50 : 50 Gew.-Teile beträgt und die polymerisation zu Ende geführt wird, wobei man vorzugsweise am Ende der Polymerisation die (Meth)acrylsäuregruppen mit Ammoniak neutralisiert (pH der Neutralisation = 9,5). Die Durchführung geschieht nach den üblichen Verfahren der Emulsionspolymerisation, z.B. im Zulauf- oder im Batch-Verfahren (vgl. Houben-Weyl, 4. Auflage, Bd. XIV/I loc.cit).

Die Initiatoren IN sind an sich bekannt vgl. J. Brandrup, E.H. Immergut, Polymer Handbook 3rd. Ed., II-1, J. Wiley 1989. Die Initiatoren IN lassen sich - soweit sie Azoverbindungen darstellen, vorzugsweise durch die Formel I-A wiedergeben: 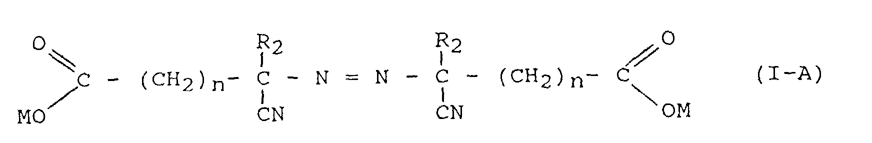 worin R₂ für CH₃ und n für eine Zahl von 1 bis 4 steht.

Insbesondere sind die Initiatoren IN der Formel I ausgewählt aus der Gruppe bestehend aus Metallsalzen der Peroxodischwefelsäure wie z.B. Kaliumperoxodisulfat (KPS), Natriumperoxodisulfat (NaPS) und den Metallsalzen der 4,4'-Azobis-(4-cyanovaleriansäure) wie dem Kalium- oder Natriumsalz. Nicht zur Anwendung kommen sollen dagegen die üblicherweise verwendeten Ammoniumsalze. Die Endpolymerisation kann vorteilhaft durch Zusatz eines Redoxinitiators bewirkt werden.
Ein homogener Einbau der (Meth)acrylsäure sowie eine deutliche Variation des Kern-Schale-Verhältnisses über die angegebene Variationsbreite für das Verhältnis Kern zu Schale zwischen 30 : 70 und 70 : 30 hinaus hat nach vorliegenden Erkenntnissen eine ganz erhebliche Verschlechterung der Wärmestandfestigkeit zur Folge. Die Neutralisierung der (Meth)acrylsäuregruppen mit Ammoniak am Ende der Polymerisation dient zur Verbesserung der Handhabung der Dispersion (verbesserte Scherstabilität) sowie der Verarbeitbarkeit der Dispersion (Filmbildung).
Die Bestimmung der Säureverteilung der Dispersionen ergab einen größeren Anteil von säuregruppenhaltigen Oligomeren (M_{W} = < 400 g/mol) im Serum, die sich aufgrund der großen Menge und Reaktivität der Startradikale (Oligomeradikale) in der Wasserphase bilden. Es kann vermutet werden, ohne jedoch die vorliegende Erfindung dadurch beschränken zu wollen, daß der erhöhte Gehalt an säuregruppenhaltigen Oligomeren im Serum der Dispersionen einem Tackifier vergleichbar für die beobachtete starke Erhöhung der Klebkraft des Polymerfilms verantwortlich ist.

### Durchführung der Erfindung

Die erfindungsgemäßen Haftkleber werden nach dem an sich bekannten Verfahren der Emulsionspolymerisation hergestellt [vgl. Houben-Weyl, Methoden der Organischen Chemie, 4. Auflage, Bd. E20, S. 1150 - 1156, Georg-Thieme-Verlag (1987); Ullmann's Encyclopedia of Industrial Chemistry, 5th. Ed. Vol. 21A, VCH (1992); H. Rauch-Puntigam, Th. Völker, Acryl- und Methacrylverbindungen, S. 217 - 230, Springer Verlag 1967].
Das Verfahren lehnt sich in der allgemeinen Durchführungsweise an den Stand der Technik an. Man verwendet als Emulgatoren zweckmäßig grenzflächenaktive Substanzen mit einem HLB-Wert über 12. z.B. anionische Emulgatoren vom Typ der Sulfate und Sulfonate von Oligoglykolethern, insbesondere auch nichtionische Emulgatoren vom Typ der Oxethylierungs-Produkte von Alkylphenolen und Alkanolen mit 12 - 20 Kohlenstoffatomen. Genannt seien als anionische Emulgatoren beispielsweise Sulfonbernsteinsäureester, die auch bei pH-Werten unter dem Neutralpunkt wirksam sind. Im einzelnen kann dabei wie folgt vorgegangen werden:
Man gibt zweckmäßig in ein mit Rührvorrichtung, Temperierung und Dosierung ausgestattetes Reaktionsgefäß vollentsalztes Wasser (ca. 35 % der wäßrigen Phase), Emulgator - als Anhalt seien etwa 0,03 Gew.-% des Sulfobernsteinsäureesters genannt - und den Saatlatex auf Acrylatbasis, beispielsweise mit einem Teilchendurchmesser von 50 nm.
Man erwärmt die Vorlage - beispielsweise auf 80 Grad C - und gibt ca. 10 Gew.-% der (mit dem entsprechenden Alkali, z.B. Natriumhydrogencarbonat neutralisierten) Gesamtinitiatormenge in etwa der doppelten Menge Wasser gelöst zu.
Zu dieser Lösung wird bei der gewählten Temperatur innerhalb einiger Stunden - als Anhalt seien vier Stunden genannt - unter Rühren eine Emulsion des Butylacrylats in (entsalztem) Wasser, welche zweckmäßig sowohl das nichtionische Tensid als den anionischen Emulgator enthält - als Anhalt sei ein Gewichtsverhältnis von ca. 1 : 4 genannt - zudosiert.
In der Emulsion, die z.B. Butylacrylat und Wasser im Gew.-Verhältnis von etwa 2 : 1 enthalten kann, sind vorzugsweise etwa 0,5 Gew.-% an Initiator IN der Formel (I), zweckmäßig neutralisiert mit dem entsprechenden Alkalihydrogencarbonat.
Nach etwa der Hälfte der Zulaufzeit wird die (Meth)acrylsäure zweckmäßig ohne Unterbrechung des Zulaufs einemulgiert.
Vorzugsweise hält man den Ansatz noch für eine gewisse Zeit, beispielsweise eine Stunde bei erhöhter Temperatur und läßt dann auf Raumtemperatur abkühlen.
Die Endpolymerisation kann dann beispielsweise bei etwas niedrigerer Temperatur z.B. bei 70 Grad C und unter Zugabe eines Redox-Initiators, etwa vom Typ tert.-Butylhydroperoxid/Eisensulfat/Natriumhydroxymethylsulfinat erfolgen.
Schließlich gibt man zweckmäßig noch Entschäumer, beispielsweise vom Typ einer Kohlenwasserstoff-Fett-Emulsion, zu und stellt mit Ammoniak alkalisch (pH = 9,5 ± 0,5)
Die Anwendung der Haftklebedispersionen wird in einfacher Weise durch Auftragen der Dispersionen auf den zu beschichtenden Träger, beispielsweise auf (coronabehandeltes) Polypropylenbandmaterial, vorgenommen. Der Auftrag erfolgt beispielsweise mittels eines Rakelverfahrens und zwar in solcher Stärke, daß nach dem Verdampfen des Wassers und dem Verfilmen eine Haftkleberschicht im Bereich von 20 g/m² bis 30 g/m² zurückbleibt.

### Vorteilhafte Wirkungen

Die aus den erfindungsgemäßen Haftklebedispersionen resultierenden Klebefilme zeigen bei der anwendungstechnischen Prüfung eine sehr gute Klebekraft sowie eine gute Wärmestandfestigkeit. Hervorzuheben ist insbesondere, daß die erfindungsgemäßen Klebedispersionen **ohne** Zusatz von Tackifiern bzw. Kondensationsharzen bereits Klebefilme mit guter Klebkraft und Wärmestandfestigkeit ausschließlich aufgrund der aufgefundenen Herstellungsmethode aufweisen.
Die Bestimmung der Klebkraft erfolgt nach der PSTC (Pressure Sensitive Tape Council)-Test Methode (Nr.1). Die Kohäsionsfestigkeit der Klebefilme wird durch Messung der Wärmestandfestigkeit charakterisiert (PSTC-Test Nr. 7).

Der "Tack" wird nach PSTC-Test Nr. 6 bestimmt. (Vgl. Publikation "Test Methods for Pressure Sensitive Tapes", Pressure Sensitive Tape Council, 9th Ed.).
Wie aus der nachfolgenden Tabelle hervorgeht, zeigen die Klebefilme das gewünschte Eigenschaftsprofil (hohe Klebkraft und Wärmestandfestigkeit), sofern zur Dispersionsherstellung metallsalzhaltige Initiatoren in ausreichender Menge eingesetzt werden. Verwendet man zur Polymerisation die entsprechende ammoniumneutralisierte Form des Initiators (z.B. APS) so beobachtet man eine drastische Reduzierung der Wärmestandfestigkeit. Ebenso resultiert eine starke Erniedrigung der Initiatormenge [z.B. 0,25 % 4,4'-Azo-bis(4-cyanovaleriansäure), z.B. neutralisiert mit NaHCO₃] in einer unakzeptablen Verschlechterung der Klebefilmeigenschaften.

Die folgenden Beispiele dienen zur Erläuterung der Erfindung

### BEISPIELE

### A. Herstellung der Haftkleber-Dispersionen

### Beispiel 1

In einem mit Rührer, Temperierung und Dosiervorrichtung ausgestatteten Reaktionsgefäß werden 11,22 kg entsalztes Wasser 0,0035 kg Diisohexylsulfosuccinat (REWOPOL® SB MB 80) und 0,042 kg Saatlatex auf Acrylatbasis (Teilchendurchmesser: 50 nm) auf 80 Grad C erhitzt. Bei dieser Temperatur wird 0,028 kg Initiator (z.B. 4,4'-Azo-bis-(4-cyanovaleriansäure) gelöst in 0,052 kg Wasser und neutralisiert mit 0,018 kg Natriumhydrogencarbonat) zugegeben. Zu dieser Lösung wird eine Emulsion aus folgenden Bestandteilen bei 80 Grad C unter Rühren innerhalb von 4 Stunden zudosiert:
- 41,16 kg: Butylacrylat
- 20,04 kg: entsalztes Wasser
- 0,175 kg: Diisohexylsulfosuccinat
- 0,175 kg: 25 %ige wäßrige Lösung eines nichtionischen Tensids [Oxoalkohol C₁₃ + 40 mol Ethylenoxid (MARLIPAL® 013/400)]
- 2,1 kg: 4,4'-Azo-bis-(4-cyanovaleriansäure)-Lösung (0,21 kg 4,4'-Azo-bis-(4-cyanovaleriansäure), 1,89 kg Wasser, 0,135 kg Natriumhydrogencarbonat)

Nach zwei Stunden Emulsionszulauf werden 0,84 kg Methacrylsäure ohne Unterbrechung des Zulaufs einemulgiert. Nach Zulaufende wird der Ansatz noch eine Stunde bei 80 Grad C gehalten und dann auf Raumtemperatur abgekühlt. Hierbei erfolgt bei 70 Grad C zur Endpolymerisation die Zugabe von 0,035 kg tert.Butylhydroperoxid, 0,0003 kg Eisensulfat und 0,028 kg Natriumhydroxymethylsulfinat. Bei 40 Grad C erfolgt die Zugabe von 0,011 kg Entschäumer (Kohlenwasserstoff/Fett-Emulsion NOPCO® NXZ) sowie die ammoniakalische pH-Einstellung)

Charakteristische Normdaten der Flaftklebedispersion:
Feststoffgehalt (%) = 53 ± 1
Viskosität (mPa s) = 100 - 600
r_{NS}-Wert (nm) = 250 ± 50*
pH-Wert = 9,5 ± 0,5

* Teilchenradius gemessen mit dem NANOSIZER (mittels Photokorrelationsspektroskopie)

In der nachfolgenden Tabelle sind weitere, analog Beispiel 1 ausgeführte, Beispiele mit identischer Polymerisatzusammensetzung aufgelistet. Die Haftklebedispersionen unterscheiden sich ausschließlich im Initiatorsystem bzw. in der verwendeten Initiatormenge.

**TABELLE**

| Beisp. Nr. | Initiator IN (Gew.-% bez.Wasserphase) | Klebkraft* (N/25mm) | Wärmestandfestigkeit* (h) | TACK* (mm) |
|---|---|---|---|---|
| 2. | 0,75 % "Azo"(NaHCO₃) | 7,0 | > 170 | 70 |
| 3. | 1,0 % "Azo"(NaHCO₃) | 7,1 | > 170 | 90 |
| 4. | 1 % KPS | 8,3 | > 120 | 90 |
| 5. | 0,75 % KPS | 7,5 | > 100 | 60 |
| 6. | 1 % NaPS | 8,3 | > 100 | |
| 7. | 0,35 % "Azo"(NaHCO₃) + 0,5 % KPS | 8,5 | > 170 | 20 |
| 8. | 0,25 % "Azo"(NaHCO₃) | 5,2 | < 10 | |
| 9. | 1 % APS | 9,5 | < 2 | 60 |
| 10. | 1 % "Azo" (NH₄HCO₃) | 7,1 | < 1 | |
| "Azo" = 4,4'-Azo-bis(4-cyanovaleriansäure) APS = Ammoniumperoxodisulfat KPS = Kaliumperoxodisulfat NaPS = Natriumperoxodisulfat | | | | |

| | | | | |
|---|---|---|---|---|
| * = Die Bestimmung der Klebkraft, der Wärmestandfestigkeit und des TACK erfolgte nach den PSTC (Pressure Sensitive Council)-Testmethoden Nr.1, Nr.7 und Nr.6 | | | | |

## Patentansprüche

1. Verfahren zur Herstellung von Haftklebedispersionen auf Basis eines Copolymerisats CP, aufgebaut aus Butylacrylat und (Meth)acrylsäure, wobei das Gewichts Verhältnis der beiden Monomeren zwischen 99.5 : 0.5 und mehr als 85 : weniger als 15 liegt
dadurch gekennzeichnet,
daß man in wäßriger Phase unter Erwärmen und in Anwesenheit mindestens eines wasserlöslichen Initiators IN der Formel (I)
M R₁ (I)
worin M für ein Metallkation und R₁ für das Anion einer Peroxosäure oder einer Azogruppenhaltigen Säure steht in Mengen von mindestens 0,5 bis zu 1,5 Gew.-% bezogen auf die Monomeren, die wäßrige Emulsion EM enthaltend Butylacrylat sowie anionische und nichtionische Emulgatoren polymerisiert, daraufhin unter Beibehaltung der erhöhten Temperatur die (Meth)acrylsäure einemulgiert und abschließend unter Zusatz eines weiteren Initiators RI die Endpolymerisation vornimmt.

2. Verfahren gemäß Anspruch 1, dadurch gekennzeichnet, daß es unter den Bedingungen der Kern-Schale-Polymerisation durchgeführt wird.

3. Verfahren gemäß Anspruch 1, dadurch gekennzeichnet, daß die Polymerisation als Emulsionszulaufverfahren durchgeführt wird.

4. Verfahren gemäß Anspruch 1, dadurch gekennzeichnet, daß die Polymerisation im Batch-Verfahren durchgeführt wird.

5. Verfahren gemäß den Ansprüchen 1 bis 4, dadurch gekennzeichnet, daß das Verhältnis Butylacrylat zu (Meth)acrylsäure 99,5 : 0,5 bis 90 : 10 Gew.-Teile beträgt.

6. Verfahren gemäß den Ansprüchen 1 und 2, dadurch gekennzeichnet, daß das Kern-Schale-Verhältnis 30 : 70 bis 70 : 30 Gew.-Teile beträgt.

7. Verfahren gemäß den Ansprüchen 1, 2 und 6, dadurch gekennzeichnet, daß der Kern aus Butylacrylat aufgebaut ist.

8. Verfahren gemäß den Ansprüchen 1 bis 7, dadurch gekennzeichnet, daß der Initiator IN ausgewählt ist aus der Gruppe bestehend aus Kalium- oder Natriumperoxodisulfat und den Azo-Verbindungen der Formel I-A 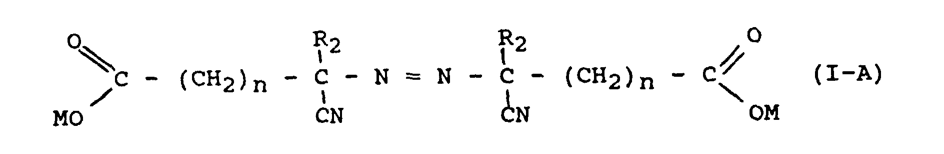 worin R₂ für einen Methylrest M für ein Metallkation und n für eine Zahl von 1 bis 4 steht.

9. Verfahren gemäß den Ansprüchen 1 und 8, dadurch gekennzeichnet, daß die Verbindung der Formel I-A ein Natrium oder Kaliumsalz der 4,4'-Azo- bis-(4-cyanovaleriansäure) ist.

10. Verfahren gemäß Anspruch 1, dadurch gekennzeichnet, daß die Verbindung der Formel I das Kalium- oder Natriumsalz der Peroxodischwefelsäure ist.

11. Verfahren gemäß den Ansprüchen 1 bis 10, dadurch gekennzeichnet, daß man nichtionische Emulgatoren vom Typ der Additionsprodukte von Ethylenoxid an Oxoalkohole oder Alkylphenole einsetzt.

12. Verfahren gemäß den Ansprüchen 1 bis 11, dadurch gekennzeichnet, daß man als anionische Emulgatoren Sulfobernsteinsäureester einsetzt.

13. Verwendung des Verfahrens gemäß den Ansprüchen 1 bis 12 zur Herstellung von Haftklebern.

14. Verwendung des Verfahrens gemäß den Ansprüchen 1 bis 13 zur Herstellung von Haftklebebändern.

## Claims

1. A process for preparing adhesive dispersions based on a copolymer CP synthesised from butyl acrylate and (meth)acrylic acid, the weight ratio of the two monomers being between 99.5 : 0.5 and above 85 : below 15, characterised in that in an aqueous phase, under heating and in the presence of at least one water-soluble initiator IN of formula (I)
M R₁ (I)
wherein M represents a metal cation and R₁ represents the anion of a peroxoacid or an azo group-containing acid, the initiator being present in amounts of at least 0.5 to 1.5 wt.% based on the monomers, the aqueous emulsion EM containing butyl acrylate as well as anionic and non-ionic emulsifiers is polymerised, then, whilst maintaining the elevated temperature, the (meth)acrylic acid is emulsified in, and, finally, while adding a further initiator RI, the final polymerisation takes place.

2. A process according to claim 1, characterised in that it is carried out under the conditions of core-shell polymerisation.

3. A process according to claim 1, characterised in that the polymerisation is carried out as an emulsion feed process.

4. A process according to claim 1, characterised in that the polymerisation is carried out as a batch process.

5. A process according to claims 1 to 4, characterised in that the ratio between butyl acrylate and (meth)acrylic acid is 99.5 : 0.5 to 90 : 10 parts by weight.

6. A process according to claims 1 and 2, characterised in that the core-shell ratio is 30 : 70 to 70 : 30 parts by weight.

7. A process according to claims 1, 2 and 6, characterised in that the core is synthesised from butyl acrylate.

8. A process according to claims 1 to 7, characterised in that the initiator IN is chosen from the group consisting of potassium or sodium peroxodisulphate and the azo- compounds of formula I-A 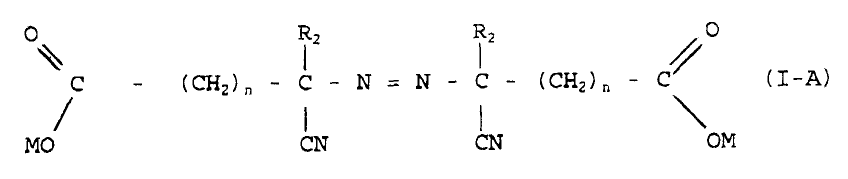 wherein R₂ represents a methyl group, M represents a metal cation and n represents an integer from 1 to 4.

9. A process according to claims 1 and 8, characterised in that the compound of formula I-A is a sodium or potassium salt of 4,4'azobis(4-cyanovaleric acid).

10. A process according to claim 1, characterised in that the compound of formula I is the potassium or sodium salt of peroxodisulphuric acid.

11. A process according to claims 1 to 10, characterised in that the non-ionic emulsifiers used are of the type of the addition products of ethylene oxide and oxoalcohols, or alkylphenols.

12. A process according to claims 1 to 11, characterised in that sulphosuccinates are used as anionic emulsifiers.

13. Use of the process according to claims 1 to 12 for preparing adhesives.

14. Use of the process according to claims 1 to 13 for preparing adhesive tapes.

## Revendications

1. Procédé de préparation de dispersions de masses auto-adhésives à base d'un copolymère CP, constitué d'acrylate de butyle et d'acide (méth)acrylique, où le rapport pondéral des deux monomères est compris entre 99,5:0,5 et plus de 85:moins de 15,
caractérisé en ce qu'
en phase aqueuse et en chauffant et en présence d'au moins un initiateur hydrosoluble IN de formule (I)
M R₁ (I)
où M est un cation de métal comme le sodium ou le potassium et R₁ est l'anion d'une peroxo-acide ou d'un acide contenant des groupes azoïques en des quantités d'au moins 0,5 à 1,5 % en poids par rapport aux monomères, polymérise l'émulsion aqueuse EM contenant de l'acrylate de butyle ainsi que des émulsionnants anioniques et non ioniques, en outre en conservant la température élevée on incorpore et on émulsionne l'acide (méth)acrylique et ensuite en ajoutant un autre initiateur RI on réalise la polymérisation finale.

2. Procédé selon la revendication 1,
caractérisé en ce qu'
on réalise dans les conditions de la polymérisation coeur/coquille.

3. Procédé selon la revendication 1,
caractérisé en ce qu'
on réalise la polymérisation comme procédé d'addition en émulsion.

4. Procédé selon la revendication 1,
caractérisé en ce qu'
on réalise la polymérisation dans un procédé par lot.

5. Procédé selon les revendications 1 à 4,
caractérisé en ce que
le rapport de l'acrylate de butyle à l'acide (méth)acrylique est 99,5:0,5 à 90:10 parties en poids.

6. Procédé selon les revendications 1 et 2,
caractérisé en ce que
le rapport coeur/coquille représente 30:70 à 70:30 parties en poids.

7. Procédé selon les revendications 1, 2 et 6,
caractérisé en ce que
le coeur est constitué d'acrylate de butyle.

8. Procédé selon les revendications 1 à 7,
caractérisé en ce qu'
on choisit l'initiateur IN dans le groupe constitué du peroxodisulfate de sodium ou de potassium et les composés azo de formule I-A 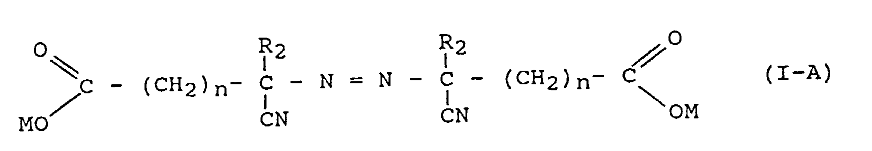 où R₂ représente un radical méthyle, M un cation métallique et n est un nombre de 1 à 4.

9. Procédé selon les revendications 1 et 8,
caractérisé en ce que
le composé de formule I-A est un sel de sodium ou de potassium du 4,4'-azo-bis-(acide 4-cyanovalérique).

10. Procédé selon la revendication 1,
caractérisé en ce que
le composé de formule I est le sel de potassium ou de sodium de l'acide peroxo-disulfonique.

11. Procédé selon les revendications 1 à 10,
caractérisé en ce qu'
on utilise des émulsionnants non ioniques du type des produits d'addition de l'oxyde d'éthylène sur des alcools oxo ou des alkylphénols.

12. Procédé selon les revendications 1 à 11,
caractérisé en ce qu'
on utilise comme émulsionnants anioniques des esters d'acide sulfosuccinique.

13. Utilisation du procédé selon les revendications 1 à 12 pour préparer des masses auto-adhésives.

14. Utilisation du procédé selon les revendications 1 à 13 pour préparer des rubans auto-adhésifs.
